# FASCICULE DE BREVET EUROPEEN

(11) **EP 3 083 345 B1**
(45) Date de publication et mention de la délivrance du brevet: **14.02.2018**
(21) Numéro de dépôt: 14811801.1
(22) Date de dépôt: 04.12.2014
(51) Int. Cl.: B60S 1/52

(54) **SYSTÈME D'ESSUYAGE D'UNE VITRE DE VÉHICULE**
SCHEIBENWISCHANLAGE FÜR EIN KRAFTFAHRZEUG
VEHICLE WINDSHIELD WIPING SYSTEM

(30) Priorité: 20.12.2013 FR 1363257
(43) Date de publication de la demande: 26.10.2016
(73) Titulaire: Valeo Systèmes d'Essuyage, 78322 Le Mesnil Saint Denis (FR)
(72) Inventeur: SEVELLEC, Pierre, F-63800 Cournon (FR); GRASSO, Giuseppe, F-63340 Le Breuil sur Couze (FR)
(74) Mandataire: Callu Danseux, Violaine
(86) Numéro de dépôt international: PCT/EP2014/076492
(87) Numéro de publication internationale: WO 2015/090982

(56) Documents cités:
- WO-A2-2011/061461
- DE-A1-102004 007 351
- FR-A1- 2 859 963
- US-A1- 2013 152 320

## Description

### Domaine de l'invention :

La présente invention est relative au domaine du nettoyage d'une vitre de véhicule, en particulier automobile. Elle vise plus particulièrement un système d'essuyage d'une vitre de véhicule, du type comportant un balai d'essuie-glace et un bras d'entraînement de ce balai.

### Etat de la technique :

Un balai d'essuie-glace comprend en général un corps longitudinal portant une lame d'essuyage, en général en caoutchouc, destinée à frotter contre le pare-brise d'un véhicule pour évacuer de l'eau en l'amenant en dehors du champ de vision du conducteur. Le balai est porté par un bras qui est entraîné par un moteur dans un mouvement de va-et-vient angulaire. Les moyens de connexion et d'articulation du balai au bras comprennent en général un dispositif de connexion lié au balai et qui s'adapte dans une pièce terminale fixée à une extrémité du bras. Par ailleurs, l'extrémité opposée du bras est articulée sur le véhicule et accouplée au moteur.

Pour améliorer le nettoyage d'un pare-brise, il est connu de pulvériser du liquide lave-glace avec au moins un moyen de projection. Un moyen de projection comporte généralement un gicleur communément fixé à la carrosserie du véhicule et projetant du liquide sur le pare-brise lorsqu'une opération de lavage est activée par le conducteur du véhicule.

Il est préférable de projeter du liquide sur le pare-brise en avant du balai pour que celui-ci l'évacue rapidement en passant, et pour diminuer ainsi le temps durant lequel la visibilité du conducteur peut être masquée. Cela est difficile à réaliser de manière optimale en projetant du liquide à partir de la carrosserie et, en général, la consommation de liquide est importante pour asperger la totalité de la surface du pare-brise essuyée par le balai.

Dans l'état de la technique, des solutions alternatives utilisent des gicleurs fixés au balai ou à son bras d'entraînement, pour pulvériser du liquide lave-glace au plus près de la lame d'essuyage du balai, en avant de ce dernier dans son sens de déplacement, et optimiser ainsi le rendement d'utilisation du liquide.

Le document FR-A1-2952883 décrit un balai d'essuie-glace dont une extrémité longitudinale porte un capuchon qui intègre un conduit équipé d'un gicleur situé près de la lame d'essuyage du balai. Le gicleur projette du liquide sur la lèvre de la lame d'essuyage, de façon à ce qu'il se répartisse sur sa longueur. Toutefois, le jet de liquide doit être suffisamment puissant pour que le liquide se répartisse uniformément sur toute la longueur de la lame. Cela nécessite un réglage précis du gicleur et un système d'amenée du liquide en bout du balai, qui soit performant, surtout si le balai est d'une grande longueur.

D'autres solutions connues consistent à répartir des gicleurs sur toute la longueur du balai, comme dans un Aquablade™ par exemple, de manière à distribuer le liquide lave-glace uniformément sur toute la longueur du balai. Cependant, ces solutions sont relativement coûteuses.

Encore d'autres solutions, par exemple celles décrites dans les documents FR-A1-2859963, DE-A1-102004007351 et WO-A1-2012/144547, projettent du liquide lave-glace depuis le bras d'entraînement du balai, DE-A1-102004007351 montrant aussi le préambule de la première revendication. La projection du liquide est effectuée en plusieurs jets dont les points d'impact sont situés sur le pare-brise. Il est dans ce cas difficile d'assurer une répartition homogène du liquide sur toute la longueur de la lame d'essuyage. Pour cela, il faudrait régler correctement l'inclinaison des différents jets ainsi que la répartition de leurs vitesses en fonction de la longueur du balai et de la position des moyens de projection, ce qui est relativement complexe. Par ailleurs, il peut s'avérer difficile de mouiller suffisamment le pare-brise directement devant la lame d'essuyage, sur sensiblement toute la longueur du balai.

L'invention propose une solution simple, efficace et économique à au moins une partie des problèmes des techniques antérieures. Elle a notamment pour objet un système d'essuyage comportant des moyens de projection de liquide, qui assurent une bonne répartition du liquide sur sensiblement toute la longueur du balai.

### Exposé de l'invention :

L'invention propose à cet effet un système d'essuyage d'une vitre de véhicule, comprenant un balai d'essuie-glace, un bras d'entraînement dudit balai, et des moyens de connexion et d'articulation du balai à une extrémité du bras, ledit balai comportant une lame d'essuyage, et lesdits moyens de connexion et d'articulation comprenant des moyens de projection de liquide lave-glace. Ce système est remarquable en ce que lesdits moyens de projection comportent au moins un premier moyen de projection sur une partie longitudinale de la lame s'étendant entre les moyens de connexion et d'articulation et une première extrémité longitudinale de la lame, et un second moyen de projection sur une autre partie longitudinale de la lame s'étendant entre les moyens de connexion et d'articulation et une seconde extrémité longitudinale de la lame.

La vitre selon l'invention peut notamment être un pare-brise ou une lunette arrière de véhicule, en particulier automobile.

Selon l'invention, les moyens de projection envoient du liquide lave-glace sur la lame, de part et d'autre des moyens de connexion et d'articulation. Le liquide est ainsi destiné à s'écouler par « effet gouttière » le long de la lame jusqu'aux extrémités du balai. On peut de cette manière mouiller la lame sur sensiblement toute sa longueur, ce qui permet d'optimiser le nettoyage de la vitre et de limiter la consommation en liquide.

Un autre avantage de l'invention correspond au fait que les moyens de projection sont situés au niveau de la connexion entre le balai et le bras. Cela permet d'amener le liquide lave-glace aux moyens de projection en suivant simplement le bras et d'éviter d'intégrer des canalisations de liquide complexes au balai.

De préférence, lesdits moyens de projection sont en porte-à-faux des moyens de connexion et d'articulation. Cela autorise plus de possibilités et de libertés pour la ou les directions de projection du liquide. Les moyens de projection peuvent être situés au plus près de la lame.

Avantageusement, chacun desdits premier et second moyens de projection comprend au moins un orifice de projection de liquide. De manière préférée, le ou chaque orifice de projection est sensiblement disposé dans un plan longitudinal passant par la lame d'essuyage et perpendiculaire à un plan longitudinal médian de symétrie de ladite lame d'essuyage. Dans la mesure où l'on veut que le jet impacte la lame, cela permet de l'orienter de manière essentiellement horizontale vers la lame.

De façon connue, la lame d'essuyage comporte une lèvre et un talon qui sont reliés ensemble par une charnière et un organe de butée de la lèvre, qui amortit son retournement. Le ou chaque orifice de projection peut être disposé dans un plan longitudinal qui passe par la lèvre, la charnière ou l'organe de butée de la lame et qui est perpendiculaire au plan longitudinal médian de symétrie de ladite lame d'essuyage. Ce plan de symétrie peut être le plan longitudinal médian du balai.

De préférence, le ou chaque orifice de projection est sensiblement disposé dans un plan parallèle au plan médian de symétrie et qui passe par le balai d'essuyage. Cette disposition rapproche l'orifice de la lame. D'une part, cela permet de viser plus précisément la lame. D'autre part, en diminuant la distance libre du jet, il est plus facile de faire en sorte qu'il reste cohérent et rectiligne. Cela évite que le jet ne se disperse en gouttelettes qui pourraient asperger des parties de la vitre gênantes pour la visibilité du conducteur, et cela diminue la consommation de liquide lave-glace.

Lesdits premier et second moyens de projection peuvent comprendre chacun au moins une conduite arquée ou coudée débouchante et formant ledit au moins un orifice. De préférence, chaque conduite comporte une partie terminale sensiblement rectiligne faisant un angle avec le plan médian de symétrie. Cet angle peut être déterminé pour que la ligne de jet prolongeant ladite partie terminale rencontre la lame au voisinage des moyens de connexion et d'articulation.

Avantageusement, les premiers moyens de projection sont configurés pour projeter du liquide à une distance longitudinale d1 des moyens de connexion et d'articulation, cette distance d1 représentant entre 1 et 20% de la dimension longitudinale de ladite première partie longitudinale de la lame, mesurée depuis lesdits moyens de connexion et d'articulation, et/ou les seconds moyens de projection sont configurés pour projeter du liquide à une distance longitudinale d2 des moyens de connexion et d'articulation, cette distance d2 représentant entre 1 et 20% de la dimension longitudinale de ladite seconde partie longitudinale de la lame, mesurée depuis lesdits moyens de connexion et d'articulation.

Cela permet de mouiller la lame d'essuyage sur une grande longueur par ces premier et deuxième moyens de projection. En particulier, lorsque les moyens de projection sont alimentés avec une pression et un débit adaptés, du liquide de chaque jet peut atteindre l'extrémité longitudinale de la lame d'essuyage vers laquelle il est orienté. Dans cette configuration, la forme des conduites permet de former un jet plein, ce qui évite de disperser le liquide en gouttelettes en dehors de leurs cibles.

De préférence, les moyens de connexion et d'articulation sont positionnés sensiblement au centre longitudinal dudit balai d'essuie-glace.

Avantageusement, lesdits moyens de connexion et d'articulation comprennent une pièce terminale solidaire de ladite extrémité du bras, cette pièce terminale portant lesdits moyens de projection. En particulier, ladite conduite de chacun des premier et second moyens de projection peut comporter une extrémité reliée à ladite pièce terminale. De plus, ladite pièce terminale pourra comporter des moyens de raccordement des moyens de projection à une source de liquide.

De cette manière, les communications fluidiques pour alimenter les moyens de projection peuvent être installées une fois pour toutes et la conception du balai est simplifiée. De plus, l'opération de changement d'un balai n'a pas à prendre en compte de connexions liées à l'alimentation du moyen de projection du liquide.

Avantageusement, lesdits moyens de connexion et d'articulation comprennent un dispositif de connexion solidaire du balai et coopérant avec ladite pièce terminale.

Cela permet de rendre les moyens de projection de liquide indépendants du balai d'essuyage. En particulier, les moyens de projection de liquide peuvent être configurés de manière à permettre de dégager le balai de la pièce terminale sans démonter les moyens de projection.

Le système peut en outre comprendre des moyens de chauffage, en particulier du liquide lave-glace.

### Brève description des figures :

La présente invention sera mieux comprise et d'autres détails, caractéristiques et avantages de celle-ci apparaîtront plus clairement à la lecture de la description qui suit, faite à titre d'exemple non limitatif, et en référence aux dessins annexés, dans lesquels :
La figure 1 présente une vue schématique en perspective de systèmes d'essuyage d'une vitre de véhicule automobile.
La figure 2 présente un schéma de principe d'un système d'essuyage selon l'invention vu selon une direction sensiblement perpendiculaire à la vitre.
La figure 3 présente une vue de face selon la direction longitudinale d'un bras d'entraînement et d'un balai d'essuie-glace selon l'invention.

### Description détaillée de l'invention :

Dans la description qui suit, les dénominations longitudinales ou latérales se réfèrent à l'orientation d'un balai d'essuie-glace. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai. Pour les directions longitudinales, les dénominations extérieure ou intérieure s'apprécient par rapport au point de fixation du bras sur le véhicule, la dénomination intérieure correspondant à l'extrémité du bras fixée au véhicule. Enfin, les directions référencées comme supérieures ou inférieures correspondent à des orientations perpendiculaires au plan de rotation du balai, la dénomination inférieure contenant le plan de la vitre.

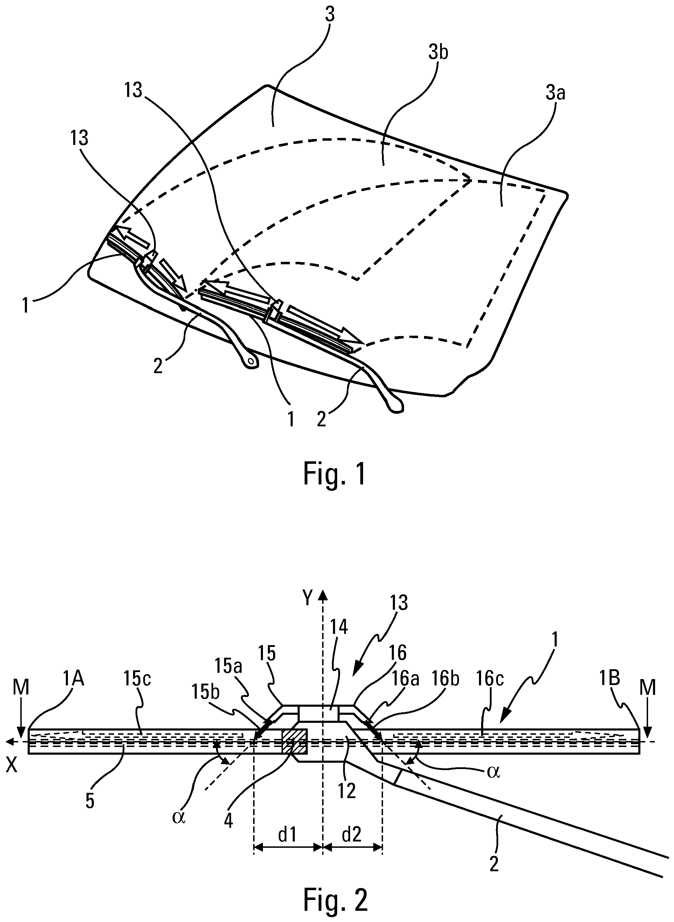

On se réfère d'abord à la figure 1 qui représente un système d'essuyage d'une vitre 3 de véhicule automobile, et dans cet exemple d'un pare-brise 3 de véhicule automobile. Ce système comporte ici deux balais d'essuie-glace 1 qui sont entraînés chacun par un bras 2 dans un mouvement de va-et-vient angulaire, autour d'un axe de rotation du bras 2. Chaque balai 1 est ainsi déplacé sur une portion de surface 3a, 3b du pare-brise 3, qui est schématiquement délimitée par des traits pointillés sur la figure 1.

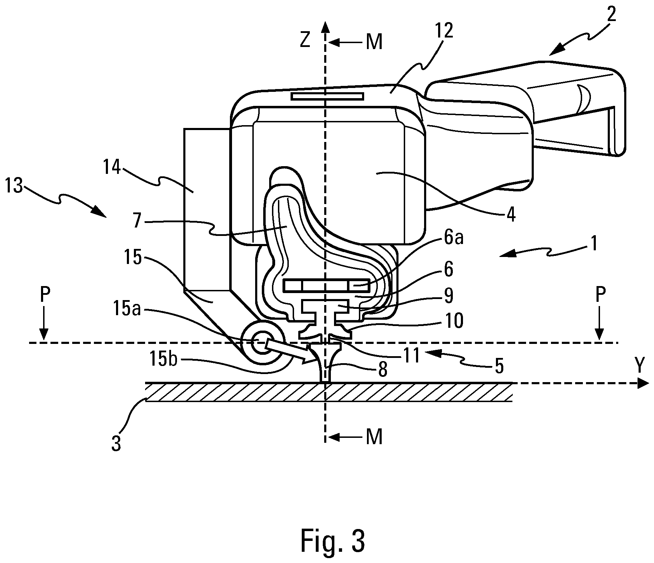

Les figures 2 et 3 représentent un mode de réalisation d'un système d'essuyage comportant un balai d'essuie-glace 1 et un bras 2 d'entrainement de ce balai. De façon typique, le balai 1 a une forme allongée dans une direction longitudinale X, sensiblement perpendiculaire à une direction Y de progression sur le pare-brise 3, et il est maintenu à une extrémité du bras 2 par un dispositif de connexion 4 situé, en général, sensiblement au milieu du balai 1.

De façon typique, en référence à la figure 3, le balai d'essuie-glace 1 comporte notamment une lame d'essuyage 5, en général en caoutchouc, destinée à frotter sur le pare-brise 3, un corps 6 de maintien de la lame 5, qui porte généralement une vertèbre de cintrage 6a et qui est relié au dispositif de connexion 4, et un déflecteur 7

La lame 5 comprend essentiellement quatre parties, en suivant une direction Z perpendiculaire au pare-brise 3 ou aux directions X et Y, et orientée vers le haut :
- une lèvre racleuse 8 destinée à être en contact avec le pare-brise 3 ;
- un talon 9 de fixation de la lame 5 au corps 6 du balai 1 ;
- une charnière 11 qui permet un retournement de la lèvre 8 vers l'avant ou vers l'arrière selon le sens de progression du balai 1 ; et
- un organe 10 coopérant par butée avec la lèvre 8 lors de son retournement, pour limiter ainsi sa course vers l'avant et vers l'arrière.

De façon connue, la lèvre 8 est reliée au talon 9 par la charnière 11 et l'organe de butée 10. Par ailleurs, le balai 1 présente un plan médian longitudinal M qui est sensiblement le plan de symétrie de la lame d'essuyage 5. Comme cela est visible en figure 3 notamment, ce plan médian M passe par le milieu de la lèvre 8, de la charnière 11, de l'organe de butée 10 et du talon 9.

Chaque balai 1 comprend un dispositif de connexion 4 à son bras 2 d'entraînement qui coopère avec une pièce terminale 12 du bras 2, pour assurer une liaison, généralement amovible afin de permettre le remplacement du balai 1 en cas d'usure.

Selon l'invention, la pièce terminale 12 du bras 2 supporte des moyens de projection 13 de liquide, en particulier de liquide lave-glace, sur la lame 3. Ces moyens de projection 13 s'étendent ici en porte-à faux de la pièce terminale 12 du bras 2, comme cela est visible aux figures 2 et 3.

Dans l'exemple présenté ici, la pièce terminale 12 enserre le dispositif de connexion 4 du balai 1. Notamment, ce dispositif de connexion 4 peut rester confiné entre deux plans parallèles au plan médian de symétrie M passant à l'intérieur de la pièce terminale 12. Cela permet ici de fixer sur cette pièce terminale 12 un support 14, appartenant aux moyens de projection 13, qui descend au niveau du balai 1, sur le côté avant lorsque ce dernier remonte sur le pare-brise 3. Les moyens de projection 13 se répartissent ici en un premier et un deuxième moyen de projection, sous la forme de deux conduites 15, 16 qui partent de l'extrémité inférieure du support 14, l'une 15 en direction de l'extrémité longitudinale extérieure 1A du balai 1, l'autre en direction de l'extrémité longitudinale intérieure 1B du balai 1. Le support 14 comporte des moyens de canalisation, non représentés, qui alimentent ces conduites 15, 16.

Comme représenté sur la figure 3, la conduite 15 descend encore du support 14 pour positionner un orifice 15a de projection du liquide dans un plan P longitudinal perpendiculaire au plan longitudinal médian M du balai 1, qui passe par la lame d'essuyage 5. On peut également constater que, dans l'exemple représenté, le plan P passe sensiblement par la charnière 11 ou l'extrémité supérieure de la lèvre 8. Des variantes peuvent être envisagées où ce plan P peut passer plutôt au niveau ou de l'organe de butée 10. De plus, toujours en référence à la figure 3, l'orifice 15a est rapproché du plan médian M du balai 1 par rapport au support 14. Il est ici positionné sensiblement au niveau du bord latéral avant du corps 6.

La conduite 16 et l'orifice 16a, non visibles sur la figure 3, sont positionnés de la même façon que la conduite 15 et l'orifice 15a dans le plan de la figure 3. Cette disposition permet de rapprocher les orifices de projection 15a, 16a de la lame d'essuyage 5 tout en permettant de dégager le balai 1, avec son dispositif de connexion 4, de la pièce terminale 12 du bras 2 pour le remplacer, si nécessaire.

D'autres géométries de la pièce terminale 12 et du dispositif de connexion 4 que celles présentées schématiquement sur les figures sont envisageables. Cependant, la pièce terminale 12 du bras 2 venant extérieurement au balai 1, l'homme du métier saura toujours réaliser un support 14 partant de la pièce terminale 12 et permettant de contourner le balai 1 pour venir positionner les orifices de projection 15a, 16a au plus près de la lame d'essuyage 5.

Selon un deuxième aspect de l'invention, visible sur la figure 2, chaque conduite 15a, 16a, après une première partie s'étendant sensiblement longitudinalement à partir du support 14, forme un coude avant son extrémité pour diriger un jet de liquide 15b, 16b vers la lame 5 (qui va ensuite s'écouler par effet gouttière le long de la lame, comme représenté en traits discontinus par les flèches 15c, 16c), en faisant un angle α non nul avec le plan médian M du balai 1. L'angle α est ici mesuré dans le plan du dessin qui est un plan perpendiculaire au plan média M. De la sorte, comme c'est indiqué sur les figures 2 et 3, le jet 15b vient impacter la lame 5, préférentiellement au niveau de la lèvre 8, et à une distance d1 du dispositif de connexion 4. De manière symétrique, le jet 16b impacte la lèvre 8 à une distance d2 du dispositif de connexion 4.

La distance d1 représente ici entre 1 et 20% de la dimension longitudinale de la première partie longitudinale (à gauche sur le dessin) de la lame, mesurée depuis le dispositif de connexion 4. La distance d2 représente ici entre 1 et 20% de la dimension longitudinale de la seconde partie longitudinale (à droite sur le dessin) de la lame, mesurée depuis le dispositif de connexion 4. Les distances d1 et d2 sont par exemple sensiblement identiques. Plus préférablement, les distances d1 et d2 sont choisies de façon à répartir les quantités d'eau proportionnellement à la surface balayée par les parties du balai leur correspondant, ou encore en fonction de la position des balais au cours du balayage. Par exemple, lorsque les balais passent en position verticale (c'est-à-dire en position « Opposé Arrêt Fixe » aussi appelée « Outwipe » en anglais), il est avantageux d'apporter plus d'eau sur ladite première partie longitudinale (à gauche sur le dessin) de la lame que sur ladite seconde partie longitudinale (à droite sur le dessin) de la lame.

Les formes terminales des conduites 15, 16 et de leurs orifices 15a, 16a sont agencées de manière à obtenir un jet 15b, 16b de liquide qui soit le plus rectiligne possible. De plus, la forme des conduites 15, 16 est déterminée de manière à ce que les distance d1 et d2 des points d'impact des jets 15a, 15b au centre des moyens de projection 13 soient les plus faibles possible.

De cette manière, lorsque les moyens de projection 13 sont alimentés en liquide avec une pression et un débit adaptés à sa forme, le liquide provenant du jet 15b, 16b sortant de chaque orifice de projection 15a, 16a, est guidé le long de la lame 5 après son impact jusqu'à chaque extrémité longitudinale 1A, 1B du balai 1, ainsi que c'est représenté par les flèche 15c et 16c sur la figure 2. Le liquide arrivant sous forme d'un jet 15b, 16b cohérent au point d'impact puis suivant la lame 5, il n'y a pas ou peu de dispersion du liquide sous forme de gouttelettes en dehors de la zone du pare-brise 3 mouillée au niveau de la lame 5.

Les moyens de projection 13 sont alimentés par un système non représenté qui comprend en particulier, une ou des pompes qui fournissent la pression et le débit adapté, un réservoir de liquide et des moyens de canalisation, longeant notamment le bras 2 pour alimenter les moyens de projection de la pièce terminale 12. Comme on peut le noter, aucun de ces moyens ne fait intervenir le balai d'essuie-glace 1. Cela permet donc de concevoir le système d'essuyage avec une première partie formée du balai 1 et une deuxième partie formée du bras 2 avec les moyens de projection 13 d'autre part, de telle sorte que les deux parties puissent être remplacées indépendamment l'une de l'autre sans intervenir sur les moyens de canalisation du liquide lave-glace.

La configuration présentée n'est pas limitative des modes de réalisation de l'invention. Les moyens de projection 13 peuvent présenter plus d'orifices et par exemple, envoyer deux jets latéraux dans un sens au lieu d'un seul pour répartir le liquide le long de la lame 5 d'essuyage jusqu'à une extrémité longitudinale 1A, 1B. Il peut aussi avoir un orifice de projection central, projetant du liquide sur la lame 5 au droit des moyens de projection 13 pour mouiller plus efficacement la partie centrale entre les points d'impacts des jets latéraux 15b, 16b.

Il est par exemple également possible d'envisager un système symétrique, projetant du liquide des deux côtés du balai 1, c'est-à-dire dans les sens montant et descendant de déplacement du balai. La projection de liquide lave-glace peut être réalisée lors du déplacement du balai 1 ou avant un déplacement du balai. Le dispositif de connexion 4 du balai 1 peut aussi être chauffé par des moyens de chauffage appropriés, pour chauffer le liquide lave-glace avant de le projeter sur le pare-brise 3.

## Revendications

1. Système d'essuyage d'une vitre de véhicule, comprenant un balai d'essuie-glace (1), un bras (2) d'entraînement dudit balai, et des moyens (4, 12) de connexion et d'articulation du balai (1) à une extrémité du bras (2), ledit balai (1) comportant une lame d'essuyage (5), lesdits moyens (4, 12) de connexion et d'articulation comprenant des moyens de projection (13) de liquide lave-glace, **caractérisé en ce que** lesdits moyens de projection (13) comportent au moins un premier moyen de projection (15-15a) sur une partie longitudinale de la lame (5) s'étendant entre les moyens (4, 12) de connexion et d'articulation et une première extrémité longitudinale (1A) de la lame (5), et un second moyen de projection (16-16a) sur une autre partie longitudinale de la lame (5) s'étendant entre les moyens (4, 12) de connexion et d'articulation et une seconde extrémité longitudinale (1B) de la lame (5).

2. Système selon la revendication 1, **caractérisé en ce que** lesdits moyens de projection (13) sont en porte-à-faux desdits moyens (4,12) de connexion et d'articulation.

3. Système selon l'une des revendications précédentes, **caractérisé en ce que** chacun desdits premier (15-15a) et second (16-16a) moyens de projection comprend au moins un orifice (15a, 16a) de projection de liquide.

4. Système selon la revendication 3, **caractérisé en ce que** le ou chaque orifice de projection (15a, 16a) est sensiblement disposé dans un plan longitudinal (P) passant par la lame (5) et perpendiculaire à un plan longitudinal médian (M) de symétrie de ladite lame (5).

5. Système selon la revendication précédente, **caractérisé en ce que**, la lame (5) comportant une lèvre (8) et un talon (9) qui sont reliés ensemble par une charnière (11) et un organe (10) de butée de la lèvre (8), le ou chaque orifice de projection (15a, 16a) est sensiblement disposé dans un plan longitudinal (P) qui passe par la lèvre (8), la charnière (11) ou l'organe de butée (10) de la lame (5) et qui est perpendiculaire audit plan longitudinal médian de symétrie (M).

6. Système selon l'une des revendications 3 à 5, **caractérisé en ce que** le ou chaque orifice de projection (15a, 16a) est sensiblement disposé dans un plan parallèle au plan médian de symétrie (M) et qui passe par le balai d'essuyage (1).

7. Système selon l'une des revendications 3 à 6, **caractérisé en ce que** lesdits premier (15-15a) et second (16-16a) moyens de projection comprennent chacun au moins une conduite (15, 16) arquée ou coudée débouchante et formant ledit au moins un orifice (15a, 16a).

8. Système selon la revendication précédente, dans lequel chaque conduite (15, 16) comporte une partie terminale sensiblement rectiligne faisant un angle (a) non nul avec le plan médian de symétrie (M).

9. Système selon la revendication précédente, dans lequel ledit angle est déterminé pour que la ligne de jet (15b, 16b) prolongeant ladite partie terminale rencontre la lame (5) au voisinage des moyens (4, 12) de connexion et d'articulation.

10. Système selon l'une des revendications précédentes, **caractérisé en ce que** lesdits moyens (4, 12) de connexion et d'articulation comprennent une pièce terminale (12) solidaire de ladite extrémité du bras (2), cette pièce terminale (12) portant lesdits moyens de projection (13).

11. Système selon la revendication précédente, en combinaison avec la revendication 7 ou 8, dans lequel ladite conduite (15, 16) de chacun des premier et second moyens de projection comporte une extrémité reliée à ladite pièce terminale (12).

12. Système selon la revendication 10 ou 11, **caractérisé en ce que** ladite pièce terminale (12) comporte des moyens de raccordement des moyens de projection (13) à une source de liquide.

13. Système selon l'une des revendications 10 à 12, dans lequel que lesdits moyens (4, 12) de connexion et d'articulation comprennent un dispositif de connexion (4) solidaire du balai et coopérant avec ladite pièce terminale (12).

14. Système selon l'une des revendications précédentes, **caractérisé en ce que** les moyens (4, 12) de connexion et d'articulation sont positionnés sensiblement au centre longitudinal dudit balai d'essuie glace (1).

15. Système selon l'un des revendications précédentes, **caractérisé en ce qu'**il comprend des moyens de chauffage, en particulier dudit liquide.

## Patentansprüche

1. Scheibenwischanlage für ein Kraftfahrzeug, umfassend ein Wischblatt (1), einen Antriebsarm (2) des Wischblatts und Mittel (4, 12) zum Anschließen und Anlenken des Wischarms (1) an ein Ende des Arms (2), wobei das Wischblatt (1) eine Wischleiste (5) umfasst, wobei die Anschluss- und Anlenkmittel (4, 12) Mittel (13) zum Aufsprühen von Scheibenwaschflüssigkeit umfassen, **dadurch gekennzeichnet, dass** die Sprühmittel (13) mindestens ein erstes Sprühmittel (15-15a) auf einem Längsabschnitt der Leiste (5), der sich zwischen den Anschluss- und Anlenkmitteln (4, 12) und einem ersten Längsende (1A) der Leiste (5) erstreckt, und ein zweites Sprühmittel (16-16a) auf einem anderen Längsabscnitt der Leiste (5) umfasst, der sich zwischen den Anschluss- und Anlenkmitteln (4, 12) und einem zweiten Längsende (1B) der Leiste (5) erstreckt.

2. Anlage nach Anspruch 1, **dadurch gekennzeichnet, dass** die Sprühmittel (13) aus den Anschluss- und Anlenkmitteln (4, 12) auskragend angeordnet sind.

3. Anlage nach einem der vorhergehenden Ansprüche, **dadurch gekennzeichnet, dass** jedes der ersten (15-15a) und zweiten (16-16a) Sprühmittel mindestens eine Öffnung (15a, 16a) zum Aufsprühen von Flüssigkeit umfasst.

4. Anlage nach Anspruch 3, **dadurch gekennzeichnet, dass** die oder jede Sprühöffnung (15a, 16a) im Wesentlichen in einer Längsebene (P) angeordnet ist, die durch die Leiste (5) verläuft und auf eine mittlere Längssymmetrieebene (M) der Leiste (5) senkrecht ist.

5. Anlage nach dem vorhergehenden Anspruch, **dadurch gekennzeichnet, dass**, wobei die Leiste (5) eine Lippe (8) und einen Ansatz (9), die durch ein Scharnier (11) verbunden sind, und ein Anschlagelement (10) der Lippe (8) umfasst, die oder jede Sprühöffnung (15a, 16a) im Wesentlichen in einer Längsebene (P) angeordnet ist, die durch die Lippe (8), das Scharnier (11) oder das Anschlagelement (10) der Leiste (5) verläuft und auf die mittlere Längssymmetrieebene (M) senkrecht ist.

6. Anlage nach einem der Ansprüche 3 bis 5, **dadurch gekennzeichnet, dass** die oder jede Sprühöffnung (15a, 16a) im Wesentlichen in einer Ebene parallel zur mittleren Symmetrieebene (M) und verlaufend durch das Wischblatt (1) angeordnet ist.

7. Anlage nach einem der Ansprüche 3 bis 6, **dadurch gekennzeichnet, dass** die ersten (15-15a) und zweiten (16-16a) Sprühmittel jeweils mindestens eine gebogene oder gekrümmte durchgehende Leitung (15, 16) umfassen, die die mindestens eine Öffnung (15a, 16a) bildet.

8. Anlage nach dem vorhergehenden Anspruch, bei der jede Leitung (15, 16) einen im Wesentlichen geraden Endabschnitt umfasst, der einen Winkel (α) ungleich Null mit der mittleren Symmetrieebene (M) bildet.

9. Anlage nach dem vorhergehenden Anspruch, bei der der Winkel derart bestimmt ist, dass die Strahllinie (15b, 16b), die den Endabschnitt verlängert, auf die Leiste (5) in der Nähe der Anschluss- und Anlenkmittel (4, 12) trifft.

10. Anlage nach einem der vorhergehenden Ansprüche, **dadurch gekennzeichnet, dass** die Anschluss- und Anlenkmittel (4, 12) ein Endstück (12) umfassen, das mit dem Ende des Arms (2) verbunden ist, wobei dieses Endstück (12) die Sprühmittel (13) trägt.

11. Anlage nach dem vorhergehenden Anspruch in Kombination mit Anspruch 7 oder 8, bei der die Leitung (15, 16) jedes der ersten und zweiten Sprühmittel ein mit dem Endstück (12) verbundenes Ende umfasst.

12. Anlage nach Anspruch 10 oder 11, **dadurch gekennzeichnet, dass** das Endstück (12) Mittel zum Anschluss der Sprühmittel (13) an eine Flüssigkeitsquelle umfasst.

13. Anlage nach einem der Ansprüche 10 bis 12, bei der die Anschluss- und Anlenkmittel (4, 12) eine mit dem Wischblatt verbundene Anschlussvorrichtung (4) umfassen, die mit dem Endstück (12) zusammenwirkt.

14. Anlage nach einem der vorhergehenden Ansprüche, **dadurch gekennzeichnet, dass** die Anschluss- und Anlenkmittel (4, 12) im Wesentlichen in der Längsmitte des Scheibenwischblatts (1) positioniert sind.

15. Anlage nach einem der vorhergehenden Ansprüche, **dadurch gekennzeichnet, dass** sie Mittel zum Heizen insbesondere der Flüssigkeit umfasst.

## Claims

1. A system of wiping of a vehicle window, comprising a window wiper brush (1), an arm (2) for driving said brush, and means (4, 12) of connecting and hinging the brush (1) to one end of the arm (2), said brush (1) having a wiper blade (5), and said means (4, 12) of connection and hinging comprising means of spraying (13) of window washing liquid, **characterized in that** said means of spraying (13) comprise at least a first means of spraying (15-15a) on a longitudinal portion of the blade (5) extending between the means (4, 12) of connection and hinging and a first longitudinal end (1A) of the blade (5), and a second means of spraying (16-16a) on another longitudinal portion of the blade (5) extending between the means (4, 12) of connection and hinging and a second longitudinal end (1B) of the blade (5).

2. The system as claimed in claim 1, **characterized in that** said means of spraying (13) are cantilevered on said means (4, 12) of connection and hinging.

3. The system as claimed in one of the preceding claims, **characterized in that** each of said first (15-15a) and second (16-16a) means of spraying comprises at least one liquid spraying orifice (15a, 16a).

4. The system as claimed in claim 3, **characterized in that** the or each spraying orifice (15a, 16a) is disposed essentially in a longitudinal plane (P) passing through the blade (5) and perpendicular to a median longitudinal plane (M) of symmetry of said blade (5) .

5. The system as claimed in the preceding claim, **characterized in that** the blade (5), comprising a lip (8) and a heel (9) which are joined together by a hinge (11) and an abutment element (10) of the lip (8), the or each spraying orifice (15a, 16a) is disposed essentially in a longitudinal plane (P) which passes through the lip (8), the hinge (11) or the abutment element (10) of the blade (5), and which is perpendicular to said median longitudinal plane (M) of symmetry.

6. The system as claimed in one of claims 3 to 5, **characterized in that** the or each spraying orifice (15a, 16a) is disposed essentially in a plane parallel to the median plane of symmetry (M) and passing through the wiper brush (1).

7. The system as claimed in one of claims 3 to 6, **characterized in that** said first (15-15a) and second (16-16a) spraying means each comprise at least one arched or bent emptying conduit (15, 16) forming said at least one orifice (15a, 16a).

8. The system as claimed in the preceding claim, wherein each conduit (15, 16) comprises an essentially straight terminal portion making an angle (α) other than zero with the median plane of symmetry (M).

9. The system as claimed in the preceding claim, wherein said angle is determined so that the jet line (15b, 16b) prolonging said terminal portion encounters the blade (5) in the vicinity of the means (4, 12) of connection and hinging.

10. The system as claimed in one of the preceding claims, **characterized in that** said means (4, 12) of connection and hinging contain a terminal piece (12) integrated with said end of the arm (2), this terminal piece (12) carrying said means of spraying (13).

11. The system as claimed in the preceding claim, in combination with claim 7 or 8, wherein said conduit (15, 16) of each of the first and second means of spraying contains an end connected to said terminal piece (12).

12. The system as claimed in claim 10 or 11, **characterized in that** said terminal piece (12) contains means of connecting the means of spraying (13) to a source of liquid.

13. The system as claimed in one of claims 10 to 12, wherein said means (4, 12) of connection and hinging contain a connection device (4) integrated with the brush and cooperating with said terminal piece (12).

14. The system as claimed in one of the preceding claims, **characterized in that** the means (4, 12) of connection and hinging are positioned essentially at the longitudinal center of said window wiper brush (1).

15. The system as claimed in one of the preceding claims, **characterized in that** it includes means of heating, especially of said liquid.
